# EUROPEAN PATENT APPLICATION

(11) **EP 4 769 491 A1**
(43) Date of publication of application: **01.07.2026**
(21) Application number: 24887498.4
(22) Date of filing: 31.07.2024
(51) Int. Cl.: H01M 4/02, H01M 4/13, H01M 4/14, H01M 10/00, H01M 6/00, H01M 4/06

(54) **BATTERY CELL, BATTERY, AND ELECTRIC DEVICE**

(30) Priority: 07.11.2023 CN 202323010601 U
(71) Applicant: Contemporary Amperex Technology Co., Limited, Ningde, Fujian 352100 (CN)
(72) Inventor: XU, Hu, Ningde, Fujian 352100 (CN); JIN, Haizu, Ningde, Fujian 352100 (CN); GUO, Jipeng, Ningde, Fujian 352100 (CN); PAN, Jianquan, Ningde, Fujian 352100 (CN)
(74) Representative: Gong, Jinping
(86) International application number: PCT/CN2024/108958
(87) International publication number: WO 2025/097876

(57) **Abstract**

Disclosed are a battery cell, a battery, and a power consuming device. The battery cell includes an electrode assembly. The electrode assembly includes a positive electrode plate and a negative electrode plate. The positive electrode plate includes a first edge in a first direction, and the negative electrode plate includes a second edge corresponding to the first edge. The first edge extends beyond the second edge in the first direction. The technical solutions of the embodiments can improve the reliability of the battery.

## Description

### CROSS-REFERENCE TO RELATED APPLICATIONS

The present application claims priority to Chinese Patent Application No. CN202323010601.4, filed with the China National Intellectual Property Administration on November 07, 2023 and entitled "BATTERY CELL, BATTERY, AND POWER CONSUMING DEVICE", which is incorporated herein by reference in its entirety.

### TECHNICAL FIELD

The present application relates to the technical field of batteries, and in particular, to a battery cell, a battery, and a power consuming device.

### BACKGROUND

Energy conservation and emission reduction are the key to the sustainable development of automobile industry, and electric vehicles have become an important part of the sustainable development of automobile industry due to their advantage of energy conservation and environment protection. For the electric vehicles, battery technology is also an important factor that relates to the development of the electric vehicles.

In the manufacturing process of batteries, the reliability of the batteries is an issue that cannot be ignored. Therefore, how to improve the reliability of the battery is a technical problem that needs to be solved urgently in the battery technology.

### SUMMARY

The present application provides a battery cell, a battery, and a power consuming device, which can improve the reliability of the battery.

The present application is implemented by the following technical solutions.

In a first aspect, an embodiment of the present application provides a battery cell. The battery cell includes an electrode assembly. The electrode assembly includes a positive electrode plate and a negative electrode plate. The positive electrode plate includes a first edge in a first direction. The negative electrode plate includes a second edge corresponding to the first edge. The first edge extends beyond the second edge in the first direction.

In the battery cell according to the embodiment of the present application, the first edge of the positive electrode plate extends beyond the second edge of the negative electrode plate, and thus, the effects of squeeze and shear exerted by the edge of the positive electrode plate on the negative electrode plate during the charge-discharge cycles of the battery cell can be reduced, thereby reducing the probability of shear fracture of the negative electrode plate, and thus improving the reliability of the battery cell constituted from the electrode assembly.

According to some embodiments of the present application, a thickness of the negative electrode plate is H1, a thickness of the positive electrode plate is H2, and satisfy H1<H2.

In the foregoing solution, the thickness of the negative electrode plate is smaller than that of the positive electrode plate, and the first edge of the positive electrode plate extends beyond the second edge of the negative electrode plate, so that the risk of shear fracture of the negative electrode plate caused by the positive electrode plate can be lowered.

According to some embodiments of the present application, the thickness of the negative electrode plate is H1, and satisfies 5 µm≤H1≤100 µm.

In the foregoing solution, the thickness of the negative electrode plate satisfies the above relationship. Therefore, the negative electrode plate has relatively low processing and manufacturing difficulty, and has relatively high strength.

According to some embodiments of the present application, 10 µm≤H1≤80 µm.

In the foregoing solution, the negative electrode plate has relatively high strength, and can bear a relatively high load of active materials.

According to some embodiments of the present application, the positive electrode plate includes a positive electrode current collector and a positive electrode active material layer. The positive electrode active material layer is disposed on a surface of the positive electrode current collector. The positive electrode current collector has the first edge. The positive electrode plate further includes a positive electrode tab, and the positive electrode tab extends out from the first edge.

In the foregoing solution, the first edge is an edge that extends out from the positive electrode tab, so that the positive electrode tab is electrically connected with a positive electrode terminal.

According to some embodiments of the present application, the second edge extends beyond the positive electrode active material layer in the first direction. The positive electrode current collector has a first uncoated foil region. The first uncoated foil region is located between the first edge and the positive electrode active material layer. The electrode assembly further includes a first insulating member. The first insulating member covers the first uncoated foil region, and in a thickness direction of the positive electrode plate, an orthographic projection of the second edge falls within an orthographic projection of the first insulating member.

In the foregoing solution, the second edge of the negative electrode plate extends beyond the positive electrode active material layer. The first insulating member is disposed in the first uncoated foil region, and in the thickness direction of the positive electrode plate, the orthographic projection of the second edge falls within the orthographic projection of the first insulating member, so that a height of a step (the step is formed by the edge of the positive electrode active material layer), close to the edge of the positive electrode active material layer, on the positive electrode plate is relatively low, and thus, the effects of squeeze and shear exerted by the step of the positive electrode plate on the negative electrode plate during the charge-discharge cycles of the battery cell can be reduced, thereby effectively reducing the probability of shear fracture of the negative electrode plate.

According to some embodiments of the present application, in the thickness direction of the positive electrode plate, a surface of the first insulating member facing away from the positive electrode current collector does not extend beyond a surface of the positive electrode active material layer facing away from the positive electrode current collector.

In the foregoing solution, the surface of the first insulating member facing away from the positive electrode current collector does not extend beyond the surface of the positive electrode active material layer facing away from the positive electrode current collector, so as to implement a buffer transition from the positive electrode active material layer to the first insulating member, thereby reducing a height difference of the positive electrode plate at the edge of the positive electrode active material layer, and thus lowering the risk of shear fracture of the negative electrode plate during the charge-discharge cycles of the battery cell.

According to some embodiments of the present application, the first insulating member is an insulating coating or an insulating adhesive layer.

In the foregoing solution, when the first insulating member is assembled with the positive electrode plate, the insulating coating is sprayed to the surface of the positive electrode current collector, and the insulating coating becomes the first insulating member after dried and solidified, thereby facilitating operations. Alternatively, the first insulating member may be the insulating adhesive layer pasted to the surface of the positive electrode current collector, so that the operation is simple and the processing and manufacturing difficulty is low.

According to some embodiments of the present application, the positive electrode plate further has a third edge. The third edge is disposed opposite to the first edge in the first direction. The negative electrode plate further has a fourth edge corresponding to the third edge. The fourth edge is disposed opposite to the second edge in the first direction. The third edge extends beyond the fourth edge in the first direction.

In the foregoing solution, the third edge extends beyond the fourth edge, and thus, the effect of the edge of the positive electrode plate on the negative electrode plate can be reduced at the end in the first direction away from the first edge, thereby further reducing the probability of shear fracture of the negative electrode plate.

According to some embodiments of the present application, the positive electrode plate includes the positive electrode current collector and the positive electrode active material layer. The positive electrode active material layer is disposed on the surface of the positive electrode current collector. The fourth edge extends beyond the positive electrode active material layer in the first direction. The positive electrode current collector has a second uncoated foil region. The second uncoated foil region is located between the third edge and the positive electrode active material layer. The electrode assembly further includes a second insulating member. The second insulating member covers the second uncoated foil region, and in the thickness direction of the positive electrode plate, an orthographic projection of the fourth edge falls within an orthographic projection of the second insulating member.

In the foregoing solution, the second insulating member is disposed in the second uncoated foil region, and in the thickness direction of the positive electrode plate, the orthographic projection of the fourth edge falls within the orthographic projection of the second insulating member, so that at the end of the positive electrode plate close to the third edge, a height of a step close to the edge of the positive electrode active material layer is relatively low, and thus, the effects of squeeze and shear exerted by the step of the positive electrode plate on the negative electrode plate during the charge-discharge cycles of the battery cell can be reduced, thereby effectively reducing the probability of shear fracture of the negative electrode plate.

According to some embodiments of the present application, in the thickness direction of the positive electrode plate, a surface of the second insulating member facing away from the positive electrode current collector does not extend beyond the surface of the positive electrode active material layer facing away from the positive electrode current collector.

In the foregoing solution, the surface of the second insulating member facing away from the positive electrode current collector does not extend beyond the surface of the positive electrode active material layer facing away from the positive electrode current collector, and thus, a height transition from the positive electrode active material layer to the second insulating member can be achieved in the first direction, thereby reducing a height difference of the positive electrode plate at the edge of the positive electrode active material layer, and thus lowering the risk of shear fracture of the negative electrode plate during the charge-discharge cycles of the battery cell.

According to some embodiments of the present application, the second insulating member is an insulating coating coated onto the positive electrode current collector, or the second insulating member is an insulating adhesive layer pasted to the positive electrode current collector.

In the foregoing solution, when the second insulating member is assembled with the positive electrode plate, the insulating coating is sprayed to the surface of the positive electrode current collector, and the insulating coating becomes the second insulating member after dried and solidified, thereby facilitating operations. Alternatively, the second insulating member may be the insulating adhesive layer pasted to the surface of the positive electrode current collector, so that the operation is simple and the processing and manufacturing difficulty is low.

According to some embodiments of the present application, the positive electrode plate includes the positive electrode current collector and the positive electrode active material layer. The positive electrode active material layer is disposed on the surface of the positive electrode current collector. The positive electrode active material layer extends to the third edge in the first direction.

In the foregoing solution, the positive electrode active material layer extends to the third edge, and thus, the step at the end of the positive electrode plate close to the third edge can be eliminated, thereby lowering the risk of squeeze and shear exerted by the edge of the positive electrode active material layer on the negative electrode plate, and lowering the risk of shear fracture of the negative electrode plate during the charge-discharge cycles of the battery cell.

According to some embodiments of the present application, the electrode assembly further includes a third insulating member. A portion of the third insulating member is disposed on a portion of the positive electrode active material layer extending beyond the fourth edge.

In the foregoing solution, a portion of the third insulating member is disposed on the portion of the positive electrode active material layer exceeding beyond the fourth edge, and thus, the risk of a contact-induced short circuit between positive and negative electrodes resulting from the precipitation of metal ions on the surface of the negative electrode plate can be lowered.

According to some embodiments of the present application, in the thickness direction of the positive electrode plate, the orthographic projection of the fourth edge falls within an orthographic projection of the third insulating member, and a thickness of the third insulating member is less than that of the positive electrode active material layer.

In the foregoing solution, the thickness of the third insulating member is less than that of the positive electrode active material layer, and a height difference between the third insulating member and the positive electrode active material layer is relatively small, and thus, the effect of shearing on the negative electrode plate can be reduced, and the third insulating member occupies a relatively small assembly space. Furthermore, the orthographic projection of the fourth edge falls within the orthographic projection of the third insulating member, and thus, the risk of damage to a separator resulting from the precipitation of metal ions on the surface of the negative electrode current collector can be lowered, thereby lowering the risk of a contact-induced short circuit between the positive and negative electrodes.

According to some embodiments of the present application, the third insulating member is an insulating coating or an insulating adhesive layer.

In the foregoing solution, when the third insulating member is fitted with the positive electrode plate, the insulating coating is sprayed onto the surface of the positive electrode active material layer, and the insulating coating is formed into the third insulating member after dried and solidified, thereby facilitating operations. Alternatively, the third insulating member may be the insulating adhesive layer pasted to the surface of the positive electrode active material layer, so that the operation is simple and the processing and manufacturing difficulty is low.

According to some embodiments of the present application, the positive electrode plate further has the third edge, a fifth edge, and a sixth edge. The third edge is disposed opposite to the first edge in the first direction. The fifth edge connects a first end of the first edge and a first end of the third edge. The sixth edge connects a second end of the first edge and a second end of the third edge. The negative electrode plate further has a seventh edge corresponding to the fifth edge and an eighth edge corresponding to the sixth edge. In a second direction, the fifth edge extends beyond the seventh edge, and/or, the sixth edge extends beyond the eighth edge. The second direction is perpendicular to the first direction.

In the foregoing solution, the fifth edge extends beyond the seventh edge, and/or, the sixth edge extends beyond the eighth edge, and thus, the effects of squeeze and shear exerted by the edge of the positive electrode plate on the negative electrode plate during the charge-discharge cycles of the battery cell is further reduced, thereby reducing the probability of shear fracture of the negative electrode plate, and thus improving the reliability of the battery cell constituted from the electrode assembly.

According to some embodiments of the present application, the positive electrode plate includes the positive electrode current collector and the positive electrode active material layer. The positive electrode active material layer is disposed on the surface of the positive electrode current collector. In the second direction, the positive electrode active material layer extends to the fifth edge, and/or, the positive electrode active material layer extends to the sixth edge.

In the foregoing solution, the positive electrode active material layer extends to the fifth edge and/or the sixth edge, and thus, steps at two ends of the positive electrode plate in the second direction can be eliminated, thereby further lowering the risk of squeeze and shear exerted by the edge of the positive electrode active material layer on the negative electrode plate, and lowering the risk of shear fracture of the negative electrode plate during the charge-discharge cycles of the battery cell.

According to some embodiments of the present application, the electrode assembly further includes a fourth insulating member. A portion of the fourth insulating member is disposed on a portion of the positive electrode active material layer extending beyond the seventh edge. A thickness of the fourth insulating member is less than that of the positive electrode active material layer, and in the thickness direction of the positive electrode plate, an orthographic projection of the seventh edge falls within an orthographic projection of the fourth insulating member. In addition/alternatively, the electrode assembly further includes a fifth insulating member. A portion of the fifth insulating member is disposed on a portion of the positive electrode active material layer extending beyond the eighth edge. A thickness of the fifth insulating member is less than that of the positive electrode active material layer, and in the thickness direction of the positive electrode plate, an orthographic projection of the eighth edge falls within an orthographic projection of the fifth insulating member.

In the foregoing solution, the thickness of the fourth insulating member is less than that of the positive electrode active material layer, and a height difference between the fourth insulating member and the positive electrode active material layer is relatively small, and/or, the thickness of the fifth insulating member is less than that of the positive electrode active material layer, and a height difference between the fifth insulating member and the positive electrode active material layer is relatively small, and thus, the effect of shearing on the negative electrode plate can be reduced, thereby lowering the risk of shear fracture of the negative electrode plate, and the fourth insulating member and the fifth insulating member occupy relatively small assembly space. Furthermore, the orthographic projection of the seventh edge falls within the orthographic projection of the fourth insulating member, and/or the orthographic projection of the eighth edge falls within the orthographic projection of the fifth insulating member, and thus, the risk of damage to a separator resulting from the precipitation of metal ions on the surface of the negative electrode current collector can be lowered, thereby lowering the risk of a contact-induced short circuit between the positive and negative electrodes.

According to some embodiments of the present application, the fourth insulating member is an insulating coating or an insulating adhesive layer; and/or, the fifth insulating member is an insulating coating or an insulating adhesive layer.

In the foregoing solution, the fourth insulating member and the fifth insulating member may be each an insulating coating sprayed onto the surface of the positive electrode active material layer, or the fourth insulating member and the fifth insulating member may be each an insulating adhesive layer pasted to the surface of the positive electrode active material layer, so that the operation is simple and the processing and manufacturing difficulty is low.

According to some embodiments of the present application, the negative electrode plate includes a negative electrode current collector and a metal layer. The metal layer is disposed on a surface of the negative electrode current collector.

In the foregoing solution, the metal layer has a relatively thin thickness, and when the first edge extends beyond the second edge, the risk of shear fracture of the negative electrode plate due to the squeeze and shear exerted by the positive electrode plate on the negative electrode current collector and the metal layer can be lowered, thereby improving the reliability of the battery cell.

According to some embodiments of the present application, the negative electrode current collector is copper foil, and the metal layer is a lithium metal layer; or, the negative electrode current collector is aluminum foil or copper foil, and the metal layer is a sodium metal layer.

In the foregoing solution, the metal layer is a lithium metal layer or a sodium metal layer, so that the battery cell may have relatively high mass energy density and volume energy density.

According to some embodiments of the present application, the negative electrode plate includes the negative electrode current collector, and the surface of the negative electrode current collector is provided with no active material layer.

In the foregoing solution, the surface of the negative electrode current collector is provided with no active material layer, so that materials can be reduced and the costs can be reduced.

According to some embodiments of the present application, a dimension of the first edge extending beyond the second edge is X, and satisfies 0.3 mm≤X≤ 8 mm.

In the foregoing solution, the dimension of the first edge extending beyond the second edge satisfies the above relationship. Therefore, the processing and manufacturing difficulty is relatively low, and the effects on energy and energy density of the battery cell are relatively small.

According to some embodiments of the present application, 1.5 mm≤X≤4 mm.

In the foregoing solution, compared with 0.3 mm≤X≤8 mm, when 1.5 mm≤X≤4 mm, processing and manufacturing are easy, and the effects on the energy and energy density of the battery cell are further reduced.

In a second aspect, an embodiment of the present application provides a battery, which includes the battery cell as provided in any of the foregoing embodiments.

In a third aspect, an embodiment of the present application provides a power consuming device, which includes the battery cell or the battery as provided by any of the foregoing embodiments, where the battery cell or the battery is configured to supply electric energy.

Additional aspects and advantages of the present application will be given in the following description, some of which will become apparent from the following description or may be learned from the practice of the present application.

### BRIEF DESCRIPTION OF THE DRAWINGS

To describe the technical solutions of the embodiments of the present application more clearly, the following briefly introduces the accompanying drawings required to be used in the embodiments. It should be understood that the accompanying drawings in the following description show only some embodiments of the present application and therefore should not be regarded as limiting the scope, and a person of ordinary skill in the art may still derive other drawings from these accompanying drawings without creative efforts.
FIG. 1 is a schematic structural diagram of a vehicle provided in some embodiments of the present application;
FIG. 2 is an exploded view of a battery provided in some embodiments of the present application;
FIG. 3 is an exploded view of a battery cell provided in some embodiments of the present application;
FIG. 4 is a schematic structural diagram of an electrode assembly provided in some embodiments of the present application;
FIG. 5 is a sectional view of an electrode assembly provided in some embodiments of the present application;
FIG. 6 is a schematic assembly diagram of a first insulating member with a positive electrode plate provided in some embodiments of the present application;
FIG. 7 is a schematic assembly diagram of a second insulating member with a positive electrode plate provided in some embodiments of the present application;
FIG. 8 is a schematic assembly diagram of a third insulating member with a positive electrode plate provided in some embodiments of the present application;
FIG. 9 is a partial enlarged view of portion A in FIG. 8;
FIG. 10 is a sectional view of an electrode assembly provided in some other embodiments of the present application;
FIG. 11 is a schematic assembly diagram of a fourth insulating member and a fifth insulating member with a positive electrode plate provided in some embodiments of the present application; and
FIG. 12 is a schematic assembly diagram of a sixth insulating member and a seventh insulating member with a positive electrode plate provided in some embodiments of the present application.

In the drawings, the drawings are not drawn in an actual proportion.

Reference numerals: 100-Battery; 10-Box; 11-First sub-box; 12-Second sub-box; 20-Battery cell; 21-Shell; 211-Case; 212-End cover; 22-Electrode assembly; 220-Separator; 221-Positive electrode plate; 221a-First edge; 221b-Third edge; 221c-Fifth edge; 221d-Sixth edge; 2211-Positive electrode current collector; 2212-Positive electrode active material layer; 2213-Positive electrode tab; 2214-First body portion; 2215-First uncoated foil region; 2216-Second uncoated foil region; 2217-Third uncoated foil region; 2218-Fourth uncoated foil region; 222-Negative electrode plate; 222a-Second edge; 222b-Fourth edge; 222c-Seventh edge; 222d-Eighth edge; 2221-Negative electrode current collector; 2222-Metal layer; 2223-Negative electrode tab; 2224-Second body portion; 223-First insulating member; 224-Second insulating member; 225-Third insulating member; 226-Fourth insulating member; 227-Fifth insulating member; 228-Sixth insulating member; 229-Seventh insulating member; 23-Electrode terminal; 24-Adapter; 200-Controller; 300-Motor 1000-Vehicle; X-First direction; Y-Second direction; and Z-Thickness direction of positive electrode plate.

### DETAILED DESCRIPTION

To make the objectives, technical solutions, and advantages of the embodiments of the present application clearer, the following clearly and completely describes the technical solutions in the embodiments of the present application with reference to the accompanying drawings in the embodiments of the present application. Apparently, the described embodiments are merely some embodiments of the present application rather than all of the embodiments. All other embodiments obtained by a person of ordinary skill in the art based on the embodiments of the present application without creative efforts shall fall within the protection scope of the present application.

Unless otherwise defined, meanings of all technical and scientific terms used in the present application are the same as those usually understood by a person skilled in the art to which the present application belongs. In the present application, terms used in the specification of the present application are merely intended to describe objectives of the specific embodiments, but are not intended to limit the present application. The terms "include", "have", and any variant thereof in the specification, claims and the brief description of the drawings of the present application are intended to cover a non-exclusive inclusion. In the specification and claims, or accompanying drawings of the present application, the terms "first", "second", and so on are intended to distinguish similar objects but do not necessarily indicate a specific order or primary and secondary relation.

Reference to "an embodiment" in the present application means that a particular feature, structure or characteristic described in combination with the embodiment may be included in at least one embodiment of the present application. The appearances of the phrase in various places in the specification are not necessarily all referring to the same embodiment, nor a separate or alternative embodiment that is mutually exclusive of other embodiments. It is explicitly and implicitly understood by a person skilled in the art that the embodiments described in the present application may be combined with another embodiment.

In the description of the present application, it should be noted that unless otherwise explicitly specified or defined, the terms such as "install", "connect", "connection" and "attach" should be understood in a broad sense. For example, the connection may be a fixed connection, a detachable connection, or an integral connection; or the connection may be a direct connection, an indirect connection through an intermediary, or internal communication between two elements. A person of ordinary skill in the art may understand the specific meanings of the foregoing terms in the present application according to specific situations.

In the present application, the term "and/or" is merely an association relationship for describing associated objects and represents that three relationships may exist. For example, A and/or B may represent the following three cases: only A exists, both A and B exist, and only B exists. In addition, the character "/" in the present application generally indicates an "or" relationship between the associated objects.

In the present application, the term "a plurality of" means two or more (including two). Similarly, "a plurality of groups" means two or more groups (including two groups), and "a plurality of pieces" means two or more pieces (including two pieces).

In some embodiments, the battery may be a battery module. When there are a plurality of battery cells, the plurality of battery cells are arranged and fixed to form a battery module.

In some embodiments, the battery may be a battery pack, and the battery pack includes a box and a battery cell, where the battery cell or battery module is accommodated in the box.

In some embodiments, the box may be used as a portion of a chassis structure of a vehicle. For example, a portion of the box may become at least a portion of a floor of the vehicle, or, a portion of the box may become at least a portion of a cross member and side member of the vehicle.

In some embodiments, the battery may be an energy storage apparatus. The energy storage apparatus includes an energy storage container, an energy storage electric cabinet, and the like.

In the embodiments of the present application, the battery cell may be a secondary battery. The secondary battery refers to a battery cell of which the active material can be activated by means of charging for further use after the battery cell is discharged.

The battery cell may be, but is not limited to, a lithium-ion battery, a sodium-ion battery, a sodium-lithium-ion battery, a lithium-metal battery, a sodium-metal battery, a lithium-sulfur battery, a magnesium-ion battery, a nickel-metal-hydride battery, a nickel-cadmium battery, a lead storage battery, and the like.

The battery cell generally includes an electrode assembly. The electrode assembly includes a positive electrode, a negative electrode, and a separation member. In the charge-discharge process of the battery cell, active ions (for example, lithium ions) are intercalated and deintercalated back and forth between the positive electrode and the negative electrode. The separation member is disposed between the positive electrode and the negative electrode, which can prevent a short circuit between positive and negative electrodes and allow the active ions to pass through.

In some implementations, the positive electrode may be a positive electrode plate, and the positive electrode plate may include a positive electrode current collector and a positive electrode active material disposed on at least one surface of the positive electrode current collector.

As an example, the positive electrode current collector has two opposite surfaces in a thickness direction of the positive electrode current collector, and the positive electrode active material layer is disposed on either or both of the two opposite surfaces of the positive electrode current collector.

As an example, the positive electrode current collector may be metal foil or a composite current collector. For example, as the metal foil, aluminum with a silver-plated surface, stainless steel with a silver-plated surface, stainless steel, copper, aluminum, nickel, baked carbon, carbon, nickel or titanium can be used. The composite current collector may include a polymer material substrate layer and a metal layer. The composite current collector may be formed by forming a metal material (aluminum, aluminum alloy, nickel, nickel alloy, titanium, titanium alloy, silver, silver alloy, or the like) on a polymer material substrate (for example, a substrate of polypropylene, polyethylene terephthalate, polybutylene terephthalate, polystyrene, polyethylene, or the like).

As an example, the positive electrode active material may include at least one of the following materials: lithium-containing phosphate, a lithium transition metal oxide, and respective modified compounds thereof. However, the present application is not limited to these materials, and other conventional materials that can be used as positive electrode active materials for batteries can also be used.

In some embodiments, the negative electrode may be a negative electrode plate, and the negative electrode plate may include a negative electrode current collector.

As an example, the negative electrode current collector may be metal foil or a composite current collector. For example, as the metal foil, aluminum with a silver-plated surface, stainless steel with a silver-plated surface, stainless steel, copper, aluminum, nickel, baked carbon, carbon, nickel or titanium can be used.

In some embodiments, the negative electrode current collector has two opposite surfaces in a thickness direction of the negative electrode current collector, and a negative electrode active material is disposed on either or both of the two opposite surfaces of the negative electrode current collector.

As an example, the negative electrode active material may use a negative electrode active material used for batteries well known in the art. As an example, the negative electrode active material may include at least one of the following materials: artificial graphite, natural graphite, soft carbon, hard carbon, a silicon-based material, a tin-based material, lithium titanate, or the like. The silicon-based material may be at least one selected from monatomic silicon, silicon-oxygen compound, silicon-carbon composite, silicon-nitrogen composite, and silicon alloy. The tin-based material may be at least one selected from monatomic tin, tin-oxygen compound, and tin alloy. However, the present application is not limited to these materials, and other conventional materials that can be used as negative electrode active materials for batteries can also be used. Only one or a combination of two or more of these negative electrode active materials may be used.

In some implementations, the separation member is a separator. The type of the separator is not specifically limited in the present application, and any well-known separator with a porous structure having good chemical stability and mechanical stability may be selected.

As an example, a main material of the separator may be at least one selected from glass fiber, nonwoven fabric, polyethylene, polypropylene, polyvinylidene fluoride and ceramic. The separator may be a single-layer film or a multilayer composite film without special limitations. When the separator is the multilayer composite film, materials of the layers may be the same or different without special limitations. The separation member may be an independent component located between the positive and negative electrodes, or may be attached to the surfaces of the positive and negative electrodes.

In some implementations, the separation part is a solid electrolyte. The solid electrolyte is disposed between the positive electrode and the negative electrode, and functions to transmit ions and separate the positive and negative electrodes simultaneously.

In some implementations, the electrode assembly is of a wound structure. The positive electrode plate and the negative electrode plate are wound into a wound structure.

In some implementations, the electrode assembly is of a laminated structure.

In some implementations, the battery cell may include a shell. The shell is configured to encapsulate components such as the electrode assembly and the electrolyte. The shell may be a steel shell, an aluminum shell, a plastic shell (such as polypropylene), a composite metal shell (such as a copper-aluminum composite outer shell), an aluminum-plastic film, or the like.

In some implementations, the shell includes an end cover and a case. The case is provided with an opening, and the end cover closes the opening to form a closed space used for accommodating materials such as the electrode assembly and the electrolyte. The case may be provided with one or more openings. One or more end covers may also be provided.

In some implementations, the shell is provided with at least one electrode terminal, and the electrode terminal is electrically connected with a tab of the electrode assembly. The electrode terminal may be directly connected with the tab, or may be indirectly connected with the tab via an adapter. The electrode terminal may be disposed on the end cover, or may be disposed on the case.

In some implementations, the shell is provided with an explosion-proof valve. The explosion-proof valve is configured to relieve internal pressure of the battery cell.

As an example, the battery cell may be a cylindrical battery cell, a prismatic battery cell, a pouch battery cell, or other shapes of battery cells. The prismatic battery cell includes a square-case battery cell, a blade-shaped battery cell, or a multi-prismatic battery. The multi-prismatic battery is, for example, a hexagonal prismatic battery. The embodiments of the present application impose no specific limitations.

For the development of battery technology, various design factors require to be considered, for example, performance parameters such as energy density, discharge capacity, and charge-discharge rate. In addition, the reliability of a battery also requires to be considered.

In some embodiments, an edge of the negative electrode plate usually extends beyond an edge of the positive electrode plate, thereby lowering the risk of a contact-induced short circuit between positive and negative electrodes resulting from the precipitation of metal ions. However, since a projection of the positive electrode plate falls onto the negative electrode plate, during the charge-discharge cycles of the battery cell, the electrode assembly repeatedly expands and contracts. When the electrode assembly expands, the positive electrode plate squeezes the negative electrode plate. Consequently, a corresponding negative electrode plate can be squeezed and sheared by the edge (including but not limited to the edge of the positive electrode current collector and the edge of the positive electrode active material layer) of the positive electrode plate, so that the negative electrode plate is likely to be sheared and fractured during the charge-discharge cycles of the battery cell, thereby worsening the performance of the battery cell, and even the fractured negative electrode plate pierces the separator to cause the risk of a short circuit between the positive and negative electrodes, so that the reliability of the battery cell is relatively low.

In view of this, the embodiments of the present application provide a technical solution in which the electrode assembly includes a positive electrode plate and a negative electrode plate, where the positive electrode plate includes a first edge in a first direction, and the negative electrode plate includes a second edge corresponding to the first edge, and the first edge extends beyond the second edge in the first direction, and thus, the reliability of the battery cell can be improved.

In a battery cell constituted from such electrode assembly, since the first edge of the positive electrode plate extends beyond the second edge of the negative electrode plate, during the charge-discharge cycles of the battery cell, the first edge may not squeeze or shear the negative electrode plate, and thus, the effects of squeeze and shear exerted by the edge of the positive electrode plate on the negative electrode plate are reduced, thereby reducing the probability of shear fracture of the negative electrode plate, and thus prolonging the service life of the negative electrode plate, so that the battery cell has relatively high reliability.

The battery disclosed in the embodiments of the present application may be used in but is not limited to power consuming devices such as a vehicle, a ship, or an aircraft. A power supply system of the power consuming device may be formed from the battery disclosed in the present application.

The embodiments of the present application provide a power consuming device using a battery as a power supply. The power consuming device may be, but is not limited to, a mobile phone, a tablet computer, a notebook computer, an electric toy, an electric tool, an electric bicycle, an electric motorcycle, an electric automobile, a ship, a spacecraft, and the like. The electric toy may include a fixed or mobile electric toy, for example, a game console, an electric automobile toy, an electric ship toy, and an electric airplane toy. The spacecraft may include an airplane, a rocket, an aerospaceplane, a spaceship, and the like.

For ease of description, the following embodiments are described by taking a power consuming device being a vehicle 1000 according to an embodiment of the present application as an example.

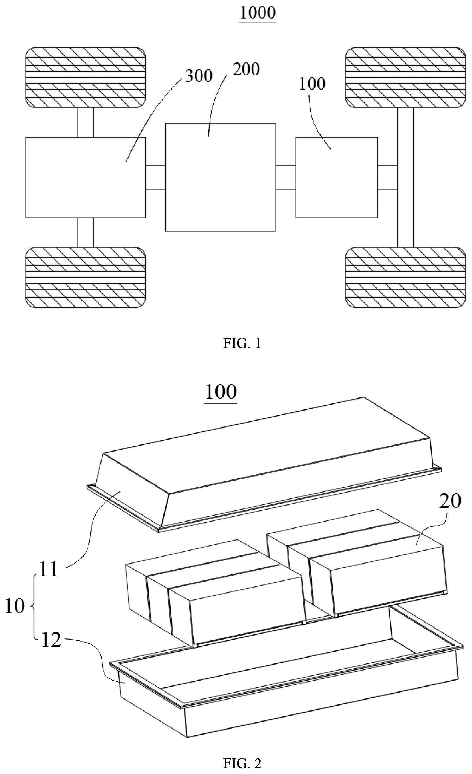

Referring to FIG. 1, FIG. 1 is a schematic structural diagram of a vehicle provided in some embodiments of the present application. The vehicle 1000 may be a fuel-powered vehicle, a gas-powered vehicle, or a new energy vehicle. The new energy vehicle may be a pure electric vehicle, a hybrid electric vehicle, or an extended range vehicle. The internal of the vehicle 1000 is provided with a battery 100. The battery 100 may be disposed at the bottom, head, or tail of the vehicle 1000. The battery 100 may be configured to supply power to the vehicle 1000. For example, the battery 100 may be used as an operating power supply of the vehicle 1000 and used for a circuit system of the vehicle 1000, for example, may be used for operating electricity requirements during starting, navigation, and operation of the vehicle 1000.

The vehicle 1000 may further include a controller 200 and a motor 300. The controller 200 is configured to control the battery 100 to supply power to the motor 300, for example, to meet operating electricity requirements during starting, navigation, and traveling of the vehicle 1000.

In some embodiments of the present application, the battery 100 can not only serve as an operating power supply of the vehicle 1000, but can also serve as a driving power supply of the vehicle 1000, in place of or partially in place of fuel or natural gas, to provide driving power for the vehicle 1000.

Referring to FIG. 2, FIG. 2 is an exploded view of a battery provided in some embodiments of the present application. The battery 100 includes a box 10 and battery cells 20. The battery cells 20 are accommodated in the box 10. The box 10 is configured to provide an accommodating space for the battery cells 20. The box 10 may adopt a variety of structures. In some embodiments, the box 10 may include a first sub-box 11 and a second sub-box 12. The first sub-box 11 and the second sub-box 12 cover each other, and the first sub-box 11 and the second sub-box 12 jointly define an accommodating space for accommodating the battery cells 20. The second sub-box 12 may be of a hollow structure with one end being open. The first sub-box 11 may be of a plate-like structure. The first sub-box 11 covers the open side of the second sub-box 12, so that the first sub-box 11 and the second sub-box 12 jointly define the accommodating space. Both the first sub-box 11 and the second sub-box 12 may be of a hollow structure with one side open. The open side of the first sub-box 11 covers the open side of the second sub-box 12.

In the battery 100, a plurality of battery cells 20 may be provided, and the plurality of battery cells 20 can be connected in series, parallel, or series-parallel. Series-parallel connection means that both series connection and parallel connection exist among the plurality of battery cells 20. The plurality of battery cells 20 may be directly connected in series, or in parallel, or in series and parallel, and then a whole constituted from the plurality of battery cells 20 may be accommodated in the box 10. Of course, the battery 100 may also be in the form that a plurality of battery cells 20 are first connected in series, or in parallel, or in series and parallel to form a battery module, a plurality of battery modules are then connected in series, or in parallel, or in series and parallel to form a whole, and the whole is accommodated in the box 10. The battery 100 may also include other structures, for example, the battery 100 may also include a bus component for achieving electrical connection among the plurality of battery cells 20.

The battery cell 20 may be a secondary battery or a primary battery. The battery cell 20 may also be a lithium-sulfur battery, a sodium-ion battery, or a magnesium-ion battery, but is not limited thereto.

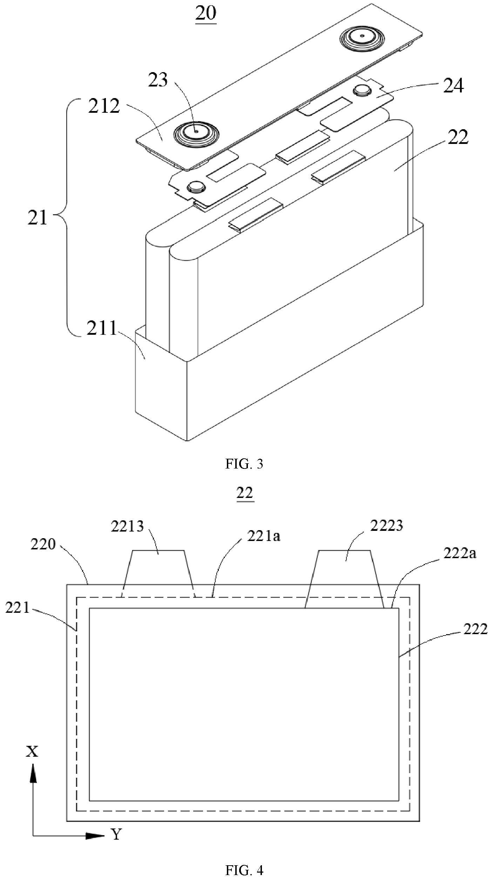

Referring to FIG. 3, FIG. 3 is an exploded view of a battery cell provided in some embodiments of the present application. As shown in FIG. 3, the battery cell 20 includes a shell 21, an electrode assembly 22, and other functional components. The shell 21 includes a case 211 and an end cover 212. The case 211 is provided with an opening, and the end cover 212 closes the opening to isolate an internal environment of the battery cell 20 from an external environment.

The case 211 is an assembly configured to form the internal environment of the battery cell 20 together with the end cover 212. The formed internal environment may be configured to accommodate the electrode assembly 22, an electrolyte, and other components. The case 211 and the end cover 212 may be independent components. The case 211 may be of various shapes and sizes. Specifically, the shape of the case 211 may be determined based on a specific shape and size of the electrode assembly 22. The case 211 may be made of various materials, such as copper, iron, aluminum, stainless steel, aluminum alloy, and plastics.

The end cover 212 refers to a component that covers the opening of the case 211 to isolate the internal environment of the battery cell 20 from the external environment. The shape of the end cover 212 is not limited and may be adapted to the shape of the case 211 to fit the case 211. Alternatively, the end cover 212 may be made of a material with certain hardness and strength (such as aluminum alloy). Thus, the end cover 212 is less likely to deform under squeeze and collision, enabling the battery cell 20 to have higher structural strength and enhanced reliability. Functional components such as electrode terminals 23 may be disposed on the end cover 212. The electrode terminals 23 may be configured to be electrically connected with the electrode assembly 22 to output or input electrical energy of the battery cell 20. The end cover 212 may also be made of various materials, such as copper, iron, aluminum, stainless steel, aluminum alloy, and plastic, which are not particularly limited in the embodiments of the present application. In some embodiments, an insulating structure may also be disposed on an inner side of the end cover 212. The insulating structure can be configured to isolate electrical connection components in the case 211 from the end cover 212, thereby lowering the risk of a short circuit. Exemplarily, the insulating structure may be made of plastics, rubber, or the like.

The electrode assembly 22 is a component in the battery cell 20 that undergoes electrochemical reactions. The case 211 may include one or more electrode assemblies 22. The electrode assembly 22 is mainly formed by winding or laminating a positive electrode plate and a negative electrode plate, and a separator is generally provided between the positive electrode plate and the negative electrode plate. The separator is configured to separate the positive electrode plate and the negative electrode plate to avoid an internal short circuit between the positive electrode plate and the negative electrode plate. Portions of the positive electrode plate and the negative electrode plate that have active materials constitute a body portion of the electrode assembly, while portions of the positive electrode plate and the negative electrode plate that have no active materials each constitute a tab. The positive electrode tab and the negative electrode tab may be located at one end of the body portion together or at two ends of the body portion separately. In the charge-discharge process of the battery, a positive electrode active material and a negative electrode active material react with an electrolyte solution, and the tabs are connected with the electrode terminals 23 via an adapter 24 to form a current loop.

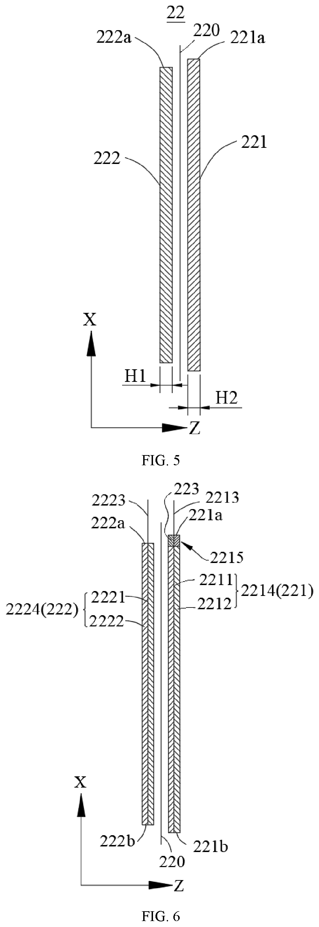

Referring to FIG. 4 and FIG. 5, FIG. 4 is a schematic structural diagram of an electrode assembly provided in some embodiments of the present application, and FIG. 5 is a sectional view of an electrode assembly provided in some embodiments of the present application. According to some embodiments of the present application, a battery cell 20 is provided. The battery cell 20 includes an electrode assembly 22. The electrode assembly 22 includes a positive electrode plate 221 and a negative electrode plate 222. The positive electrode plate 221 includes a first edge 221a in a first direction X, and the negative electrode plate 222 includes a second edge 222a corresponding to the first edge 221a. The first edge 221a extends beyond the second edge 222a in the first direction X.

As shown, a direction indicated by letter X may be the first direction. The first direction X may be a width direction of the electrode assembly 22, or may be a length direction of the electrode assembly 22. The first direction X intersects with a thickness direction of the electrode assembly 22.

Alternatively, the first direction X may be perpendicular to the thickness direction of the electrode assembly 22.

Viewed in the thickness direction of the electrode assembly 22, the first edge 221a extends beyond the second edge 222a in the first direction X, and an orthographic projection of the second edge 222a falls within an orthographic projection of the positive electrode plate 221.

The first edge 221a may be an edge of a positive electrode current collector, or may be an edge of a positive electrode active material layer. For example, when the positive electrode active material layer extends to the edge of the positive electrode current collector, the first edge 221a is the edge of the positive electrode active material layer.

The second edge 222a may be an edge of a negative electrode current collector, or may be an edge of a negative electrode active material layer. Alternatively, the negative electrode active material layer may extend to the edge of the negative electrode current collector.

The electrode assembly 22 further includes a separator 220. The separator 220 is disposed between the positive electrode plate 221 and the negative electrode plate 222 to insulate and separate the positive electrode plate 221 and the negative electrode plate 222.

According to the electrode assembly 22 in the embodiment of the present application, the first edge 221a of the positive electrode plate 221 extends beyond the second edge 222a of the negative electrode plate 222, and thus, the effects of squeeze and shear exerted by the edge of the positive electrode plate 221 on the negative electrode plate 222 during the charge-discharge cycles of the battery cell 20 can be reduced, thereby reducing the probability of shear fracture of the negative electrode plate 222, and thus improving the reliability of the battery cell 20 constituted from the electrode assembly 22.

Referring to FIG. 5, according to some embodiments of the present application, a thickness of the negative electrode plate 222 is H1, and a thickness of the positive electrode plate 221 is H2, and satisfy H1<H2.

A thickness direction of the negative electrode plate 222 is parallel to that of the positive electrode plate 221.

In the foregoing solution, the thickness of the negative electrode plate 222 is smaller than that of the positive electrode plate 221, and the first edge 221a of the positive electrode plate 221 extends beyond the second edge 222a of the negative electrode plate 222, so that the risk of shear fracture of the negative electrode plate 222 caused by the positive electrode plate 221 can be lowered.

According to some embodiments of the present application, the thickness of the negative electrode plate 222 is H1, and satisfies 5 µm≤H1≤100 µm.

Alternatively, H1 may be, but is not limited to, 5 µm, 10 µm, 20 µm, 30 µm, 40 µm, 50 µm, 60 µm, 70 µm, 80 µm, 90 µm, 100 µm, or the like. H may be any value between 5 µm and 10 µm.

In the foregoing solution, the thickness of the negative electrode plate 222 satisfies the above relationship. Therefore, the negative electrode plate has relatively low processing and manufacturing difficulty, and has relatively high strength.

According to some embodiments of the present application, 10 µm≤H1≤80 µm.

Alternatively, H1 may be, but is not limited to, 10 µm, 15 µm, 20 µm, 25 µm, 30 µm, 35 µm, 40 µm, 45 µm, 50 µm, 55 µm, 60 µm, 65 µm, 70 µm, 75 µm, 80 µm, or the like.

In the foregoing solution, the negative electrode plate 222 has relatively high strength, or can bear a relatively high load of active materials.

Referring to FIG. 4, according to some embodiments of the present application, the positive electrode plate 221 includes a positive electrode current collector 2211 and a positive electrode active material layer 2212. The positive electrode active material layer 2212 is disposed on a surface of the positive electrode current collector 2211. The positive electrode current collector 2211 has a first edge 221a. The positive electrode plate 221 further includes a positive electrode tab 2213, and the positive electrode tab 2213 extends out from the first edge 221a.

The positive electrode active material layer 2212 is coated onto the surface of the positive electrode current collector 2211, which may be that the positive electrode active material layer 2212 is coated onto the surface of one side of the positive electrode current collector 2211, or may be that the positive electrode active material layer 2212 is coated onto the surfaces of two sides of the positive electrode current collector 2211.

The positive electrode plate 221 includes a first body portion 2214 and the positive electrode tab 2213. The positive electrode tab 2213 extends out from an edge of the first body portion 2214. The first edge 221a may be the edge of the first body portion 2214 from which the tab extends out. The positive electrode active material layer 2212 may extend to the first edge 221a, or the positive electrode active material layer 2212 does not extend to the first edge 221a, so that the positive electrode current collector 2211 constituting the first body portion 2214 has an uncoated foil region.

In the foregoing solution, the first edge 221a is an edge that extends out from the positive electrode tab 2213, so that the positive electrode tab 2213 is electrically connected with a positive electrode terminal.

In the manufacturing process of the positive electrode plate 221, to reserve a cutting location for the positive electrode tab 2213, when the positive electrode active material layer 2212 is coated onto the surface of the positive electrode current collector 2211, the positive electrode active material layer 2212 does not extend to the first edge 221a of the positive electrode current collector 2211, so as to enable the positive electrode tab 2213 to extend out from the first edge 221a. In this case, the positive electrode active material layer 2212 may extend beyond the second edge 222a in the first direction X, thereby reducing the effects of squeeze and shear exerted by the edge of the positive electrode active material layer 2212 on the negative electrode plate 222. Alternatively, the second edge 222a may extend beyond the positive electrode active material layer 2212 in the first direction X, thereby lowering the risk of a contact-induced short circuit between positive and negative electrodes caused by piercing of the separator 220 resulting from the precipitation of metal ions on the surface of the negative electrode current collector.

Referring to FIG. 6, FIG. 6 is a schematic assembly diagram of a first insulating member with a positive electrode plate provided in some embodiments of the present application. According to some embodiments of the present application, the second edge 222a extends beyond the positive electrode active material layer 2212 in the first direction X. The positive electrode current collector 2211 has a first uncoated foil region 2215. The first uncoated foil region 2215 is located between the first edge 221a and the positive electrode active material layer 2212. The electrode assembly 22 further includes a first insulating member 223. The first insulating member 223 covers the first uncoated foil region 2215, and in a thickness direction Z of the positive electrode plate, the orthographic projection of the second edge 222a falls within an orthographic projection of the first insulating member 223.

As shown, a direction indicated by letter Z may be the thickness direction of the positive electrode plate.

The second edge 222a extends beyond the positive electrode active material layer 2212, so that the first uncoated foil region 2215 is formed at a position, close to the first edge 221a, on the positive electrode plate 221. The first uncoated foil region 2215 is located between the first edge 221a and the positive electrode active material layer 2212.

The first insulating member 223 is an insulating component, and can insulate and separate the positive electrode current collector and the negative electrode plate 222.

The first insulating member 223 has certain thickness. When the first insulating member 223 is disposed in the first uncoated foil region 2215, the first insulating member 223 covers the surface of the positive electrode current collector 2211, and the first insulating member 223 is in contact with the edge of the positive electrode active material layer 2212, so that a height of a step, at the first uncoated foil region 2215, on the positive electrode plate 221 can be mitigated. The step here is formed by the edge of the positive electrode active material layer 2212. For example, in the thickness direction Z of the positive electrode plate, the step is formed in a thickness variation region of the positive electrode plate.

On the same side of the positive electrode current collector 2211, a thickness of the first insulating member 223 may be the same as or different from that of the positive electrode active material layer 2212.

When the electrode assembly 22 is of a laminated structure, the thickness direction Z of the positive electrode plate may be parallel to that of the electrode assembly 22. When the electrode assembly 22 is of a wound structure, the electrode assembly 22 includes a straight region and a corner region. At the straight region, the thickness direction Z of the positive electrode plate is parallel to that of the electrode assembly 22. At the corner region, the thickness direction Z of the positive electrode plate intersects with that of the electrode assembly 22.

In the foregoing solution, the second edge 222a of the negative electrode plate 222 extends beyond the positive electrode active material layer 2212 in the first direction X, and the first insulating member 223 is disposed in the first uncoated foil region 2215, so that the height of the step, close to the edge of the positive electrode active material layer 2212, on the positive electrode plate 221 is relatively low. In the thickness direction Z of the positive electrode plate, the orthographic projection of the second edge 222a falls within the orthographic projection of the first insulating member 223, and thus, the effects of squeeze and shear exerted by the step of the positive electrode plate 221 on the negative electrode plate 222 during the charge-discharge cycles of the battery cell 20 can be reduced, thereby effectively reducing the probability of shear fracture of the negative electrode plate 222.

Referring to FIG. 6, according to some embodiments of the present application, in the thickness direction Z of the positive electrode plate, a surface of the first insulating member 223 facing away from the positive electrode current collector 2211 does not extend beyond a surface of the positive electrode active material layer 2212 facing away from the positive electrode current collector 2211.

On the same side of the positive electrode current collector 2211, the surface of the first insulating member 223 facing away from the positive electrode current collector 2211 does not extend beyond the surface of the positive electrode active material layer 2212 facing away from the positive electrode current collector 2211, so that the thickness of the first insulating member 223 is less than or equal to that of the positive electrode active material layer 2212, and an assembly space occupied by the first insulating member 223 can be reduced, thereby reducing the effect on the energy density of the battery cell 20.

In the foregoing solution, the surface of the first insulating member 223 facing away from the positive electrode current collector 2211 does not extend beyond the surface of the positive electrode active material layer 2212 facing away from the positive electrode current collector 2211, so that a height transition from the positive electrode active material layer 2212 to the first insulating member 223 can be achieved in the first direction X, thereby reducing a height difference of the positive electrode plate 221 close to the first edge 221a, and thus, the effect of shear exerted by the edge of the positive electrode active material layer 2212 on the negative electrode plate 222 can be reduced, thereby lowering the risk of shear fracture of the negative electrode plate 222 during the charge-discharge cycles of the battery cell 20.

In some embodiments, one end of the first insulating member 223 is connected with the positive electrode active material layer 2212, and the first insulating member 223 is attached to the positive electrode active material layer 2212, so that a smooth transition from the positive electrode active material layer 2212 to the first insulating member 223 is achieved. The effects of squeeze and shear exerted by the edge of the positive electrode active material layer 2212 on the negative electrode plate 222 is reduced when the positive electrode plate 221 expands.

According to some embodiments of the present application, the first insulating member 223 is an insulating coating or an insulating adhesive layer.

In the foregoing solution, when the first insulating member 223 is assembled with the positive electrode plate 221, the insulating coating is sprayed to the surface of the positive electrode current collector 2211, and the insulating coating becomes the first insulating member 223 after dried and solidified, thereby facilitating operations. Alternatively, the first insulating member 223 may be the insulating adhesive layer pasted to the surface of the positive electrode current collector 2211, so that the operation is simple and the processing and manufacturing difficulty is low.

Referring to FIG. 6, according to some embodiments of the present application, the positive electrode plate 221 further has a third edge 221b. The third edge 221b is disposed opposite to the first edge 221a in the first direction X. The negative electrode plate 222 further has a fourth edge 222b corresponding to the third edge 221b. The fourth edge 222b is disposed opposite to the second edge 222a in the first direction X. The third edge 221b extends beyond the fourth edge 222b in the first direction X.

The third edge 221b may be an edge of the first body portion 2214 away from the first edge 221a in the first direction X.

The fourth edge 222b is the fourth edge 222b of the negative electrode plate 222 that corresponds to the third edge 221b, and the fourth edge 222b is closer to the third edge 221b compared to other edges of the negative electrode plate 222.

The third edge 221b extends beyond the fourth edge 222b in the first direction X, so that two ends of the positive electrode plate 221 in the first direction X both extend beyond the edge of the negative electrode plate 222.

In the foregoing solution, the third edge 221b extends beyond the fourth edge 222b, and thus, the effect of the edge of the positive electrode plate 221 on the negative electrode plate 222 can be reduced at the end in the first direction X away from the first edge 221a, thereby further reducing the probability of shear fracture of the negative electrode plate 222.

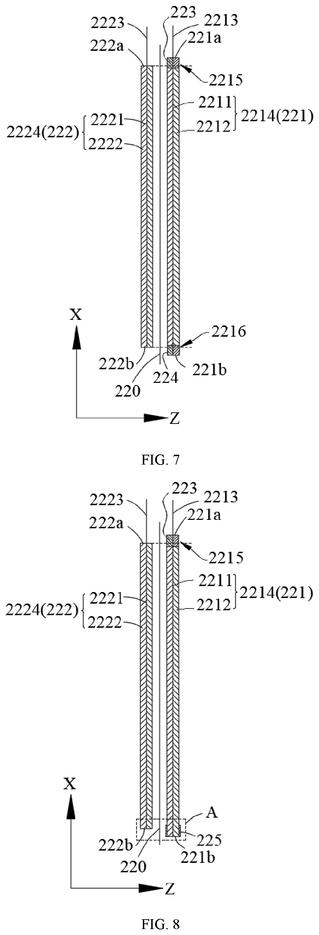

Referring to FIG. 7, FIG. 7 is a schematic assembly diagram of a second insulating member with a positive electrode plate provided in some embodiments of the present application. According to some embodiments of the present application, the positive electrode plate 221 includes the positive electrode current collector 2211 and the positive electrode active material layer 2212. The positive electrode active material layer 2212 is disposed on the surface of the positive electrode current collector 2211. The fourth edge 222b extends beyond the positive electrode active material layer 2212 in the first direction X. The positive electrode current collector 2211 has a second uncoated foil region 2216. The second uncoated foil region 2216 is located between the third edge 221b and the positive electrode active material layer 2212. The electrode assembly 22 further includes a second insulating member 224. The second insulating member 224 covers the second uncoated foil region 2216, and in the thickness direction Z of the positive electrode plate, an orthographic projection of the fourth edge 222b falls within an orthographic projection of the second insulating member 224.

The second uncoated foil region 2216 is a region of the positive electrode current collector 2211 that is close to the third edge 221b and is not coated with the positive electrode active material layer 2212. The second uncoated foil region 2216 is located between the third edge 221b and the positive electrode active material layer 2212 in the first direction X.

The second insulating member 224 is an insulating component, and can insulate and separate the positive electrode current collector 2211 and the negative electrode plate 222.

The second insulating member 224 has certain thickness. When the second insulating member 224 is disposed in the second uncoated foil region 2216, the second insulating member 224 covers the surface of the positive electrode current collector 2211, and the second insulating member 224 is in contact with the edge of the positive electrode active material layer 2212, so that a height of a step, at the second uncoated foil region 2216, on the positive electrode plate 221 can be mitigated. On the same side of the positive electrode current collector 2211, a thickness of the second insulating member 224 may be the same as or different from that of the positive electrode active material layer 2212.

In the foregoing solution, the fourth edge 222b extends beyond the positive electrode active material layer 2212 in the first direction X. The second insulating member 224 is disposed in the second uncoated foil region 2216, and in the thickness direction Z of the positive electrode plate, the orthographic projection of the fourth edge 222b falls within the orthographic projection of the second insulating member 224, so that at the end of the positive electrode plate 221 close to the third edge 221b, a height of a step close to the edge of the positive electrode active material layer 2212 is relatively low, and thus, the effects of squeeze and shear exerted by the step of the positive electrode plate 221 on the negative electrode plate 222 during the charge-discharge cycles of the battery cell 20 can be reduced, thereby reducing the probability of shear fracture of the negative electrode plate 222.

Referring to FIG. 7, according to some embodiments of the present application, in the thickness direction Z of the positive electrode plate, a surface of the second insulating member 224 facing away from the positive electrode current collector 2211 does not extend beyond the surface of the positive electrode active material layer 2212 facing away from the positive electrode current collector 2211.

On the same side of the positive electrode current collector 2211, the surface of the second insulating member 224 facing away from the positive electrode current collector 2211 does not extend beyond the surface of the positive electrode active material layer 2212 facing away from the positive electrode current collector 2211, so that the thickness of the second insulating member 224 is less than or equal to that of the positive electrode active material layer 2212, and an assembly space occupied by the second insulating member 224 can be reduced, thereby reducing the effect on the energy density of the battery cell 20.

In the foregoing solution, the surface of the second insulating member 224 facing away from the positive electrode current collector 2211 does not extend beyond the surface of the positive electrode active material layer 2212 facing away from the positive electrode current collector 2211, and thus, a height transition from the positive electrode active material layer 2212 to the second insulating member 224 can be achieved in the first direction X, thereby reducing a height difference of the positive electrode plate 221 at the edge of the positive electrode active material layer 2212, and thus lowering the risk of shear fracture of the negative electrode plate 222 during the charge-discharge cycles of the battery cell 20.

In some embodiments, one end of the second insulating member 224 is connected with the positive electrode active material layer 2212, and the second insulating member 224 is attached to the positive electrode active material layer 2212, so that a smooth transition from the positive electrode active material layer 2212 to the second insulating member 224 is achieved. The effects of squeeze and shear exerted by the edge of the positive electrode active material layer 2212 on the negative electrode plate 222 is reduced when the positive electrode plate 221 expands.

According to some embodiments of the present application, the second insulating member 224 is an insulating coating coated onto the positive electrode current collector 2211, or the second insulating member 224 is an insulating adhesive layer pasted to the positive electrode current collector 2211.

In the foregoing solution, when the second insulating member 224 is assembled with the positive electrode plate 221, the insulating coating is sprayed to the surface of the positive electrode current collector 2211, and the insulating coating becomes the second insulating member 224 after dried and solidified, thereby facilitating operations. Alternatively, the second insulating member 224 may be the insulating adhesive layer pasted to the surface of the positive electrode current collector 2211, so that the operation is simple and the processing and manufacturing difficulty is low.

In some embodiments, a material of the second insulating member 224 may be the same as that of the first insulating member 223, thereby reducing the manufacturing costs.

Referring to FIG. 6, according to some embodiments of the present application, the positive electrode plate 221 includes the positive electrode current collector 2211 and the positive electrode active material layer 2212. The positive electrode active material layer 2212 is disposed on the surface of the positive electrode current collector 2211. The positive electrode active material layer 2212 extends to the third edge 221b in the first direction X.

When the positive electrode active material layer 2212 extends to the third edge 221b, the edge of the positive electrode active material layer 2212 and the third edge 221b jointly constitute the edge of the positive electrode plate 221.

When the positive electrode active material layer is coated onto the positive electrode current collector, the positive electrode active material layer 2212 extends to the third edge 221b, thereby facilitating coating of the positive electrode active material layer 2212 and thus facilitating processing and manufacturing of the positive electrode plate 221.

In some embodiments, when the battery cell 20 is a metal battery, the negative electrode plate 222 includes a negative electrode current collector 2221 and a metal layer 2222, and in the thickness direction Z of the positive electrode plate, the orthographic projection of the fourth edge 222b may fall within an orthographic projection of the positive electrode active material layer. Due to characteristics of the metal battery, during the charge-discharge cycles of the battery cell 20, metal ions can move between the negative electrode current collector and the positive electrode plate.

In the foregoing solution, the positive electrode active material layer 2212 extends to the third edge 221b, and thus, the step at the end of the positive electrode plate 221 close to the third edge 221b can be eliminated, thereby lowering the risk of squeeze and shear exerted by the edge of the positive electrode active material layer 2212 on the negative electrode plate 222, and lowering the risk of shear fracture of the negative electrode plate 222 during the charge-discharge cycles of the battery cell 20.

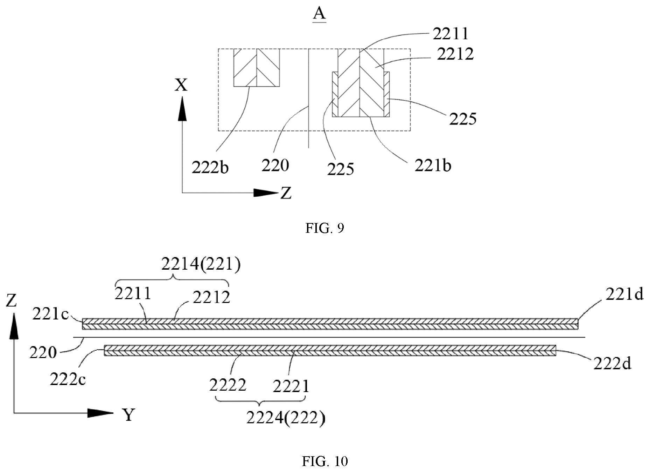

Referring to FIG. 8 and FIG. 9, FIG. 8 is a schematic assembly diagram of a third insulating member with a positive electrode plate provided in some embodiments of the present application, and FIG. 9 is a partial enlarged view of portion A in FIG. 8. According to some embodiments of the present application, the electrode assembly 22 further includes a third insulating member 225. A portion of the third insulating member 225 is disposed on a portion of the positive electrode active material layer 2212 extending beyond the fourth edge 222b.

In the foregoing solution, a portion of the third insulating member 225 is disposed on the portion of the positive electrode active material layer 2212 exceeding beyond the fourth edge 222b, and thus, the risk of a contact-induced short circuit between positive and negative electrodes resulting from the precipitation of metal ions on the surface of the negative electrode plate 222 can be lowered.

According to some embodiments of the present application, in the thickness direction Z of the positive electrode plate, the orthographic projection of the fourth edge 222b falls within an orthographic projection of the third insulating member 225, and a thickness of the third insulating member 225 is less than that of the positive electrode active material layer 2212.

Viewed in the thickness direction Z of the positive electrode plate, the third insulating member 225 partially overlaps the negative electrode plate 222, so that the orthographic projection of the fourth edge 222b of the negative electrode plate 222 falls within the orthographic projection of the third insulating member 225.

In the foregoing solution, the thickness of the third insulating member 225 is less than that of the positive electrode active material layer 2212, and a height difference between the third insulating member 225 and the positive electrode active material layer 2212 is relatively small, and thus, the effect of shearing on the negative electrode plate 222 can be reduced, and the third insulating member 225 occupies a relatively small assembly space. Furthermore, the orthographic projection of the fourth edge 222b falls within the orthographic projection of the third insulating member 225, and thus, the risk of damage to a separator 220 resulting from the precipitation of metal ions on the surface of the negative electrode current collector can be lowered, thereby lowering the risk of a contact-induced short circuit between the positive and negative electrodes.

According to some embodiments of the present application, the third insulating member 225 is an insulating coating or an insulating adhesive layer.

In the foregoing solution, when the third insulating member 225 is fitted with the positive electrode plate 221, the insulating coating is sprayed onto the surface of the positive electrode active material layer 2212, and the insulating coating is formed into the third insulating member 225 after dried and solidified, thereby facilitating operations. Alternatively, the third insulating member 225 may be the insulating adhesive layer pasted to the surface of the positive electrode active material layer 2212, so that the operation is simple and the processing and manufacturing difficulty is low.

In some embodiments, a material of the third insulating member 225 may be the same as that of the first insulating member 223, thereby reducing the manufacturing costs.

Referring to FIG. 10, FIG. 10 is a sectional view of an electrode assembly provided in some other embodiments of the present application. According to some embodiments of the present application, the positive electrode plate 221 further has the third edge 221b, a fifth edge 221c, and a sixth edge 221d. The third edge 221b is disposed opposite to the first edge 221a in the first direction X. The third edge 221b is disposed opposite to the first edge 221a in the first direction X. The fifth edge 221c connects a first end of the first edge 221a and a first end of the third edge 221b. The sixth edge 221d connects a second end of the first edge 221a and a second end of the third edge 221b. The negative electrode plate 222 further has a seventh edge 222c corresponding to the fifth edge 221c and an eighth edge 222d corresponding to the sixth edge 221d. In a second direction Y, the fifth edge 221c extends beyond the seventh edge 222c, and/or, the sixth edge 221d extends beyond the eighth edge 222d. The second direction Y is perpendicular to the first direction X.

As shown, a direction indicated by letter Y may be the second direction. The second direction Y may be the length direction of the electrode assembly 22, or may be the width direction of the electrode assembly 22.

The first end and second end of the first edge 221a are two opposite ends of the first edge 221a. The first end and second end of the third edge 221b are two opposite ends of the third edge 221b.

In some embodiments, the electrode assembly 22 may be of a laminated structure.

In some embodiments, the electrode assembly 22 may be of a wound structure, and the second direction Y may be the length direction of an electrode plate when the electrode plate is unwound.

When the electrode assembly 22 is of the laminated structure, a plurality of positive electrode plates 221 and a plurality of negative electrode plates 222 are disposed in a staggered manner, and a separator 220 is disposed between adjacent positive electrode plates 221 and negative electrode plates 222.

In some embodiments, the first direction X may be a length direction of the positive electrode plate 221, and the second direction Y may be a width direction of the positive electrode plate 221. Alternatively, the first direction X may be the width direction of the positive electrode plate 221, and the second direction Y may be the length direction of the positive electrode plate 221.

The fifth edge 221c and the sixth edge 221d are two edges of the positive electrode plate 221 that are disposed opposite to each other in the second direction Y, and the fifth edge 221c and the sixth edge 221d are located at two opposite ends of the positive electrode plate 221.

The seventh edge 222c and the eighth edge 222d are two edges of the negative electrode plate 222 that are disposed opposite to each other in the second direction Y. The seventh edge 222c is closer to the fifth edge 221c compared to the eighth edge 222d, and the eighth edge 222d is closer to the sixth edge 221d compared to the seventh edge 222c.

In the foregoing solution, the fifth edge 221c extends beyond the seventh edge 222c, and/or, the sixth edge 221d extends beyond the eighth edge 222d, and thus, the effects of squeeze and shear exerted by the edge of the positive electrode plate 221 on the negative electrode plate 222 during the charge-discharge cycles of the battery cell 20 is further reduced, thereby reducing the probability of shear fracture of the negative electrode plate 222, and thus improving the reliability of the battery cell 20 constituted from the electrode assembly 22.

Referring to FIG. 10, according to some embodiments of the present application, the positive electrode plate 221 includes the positive electrode current collector 2211 and the positive electrode active material layer 2212. The positive electrode active material layer 2212 is disposed on the surface of the positive electrode current collector 2211. In the second direction Y, the positive electrode active material layer 2212 extends to the fifth edge 221c, and/or, the positive electrode active material layer 2212 extends to the sixth edge 221d.

When the positive electrode active material layer 2212 extends to the fifth edge 221c, the edge of the positive electrode active material layer 2212 and the fifth edge 221c jointly constitute the edge of the end of the positive electrode plate 221 in the second direction Y. When the positive electrode active material layer 2212 extends to the sixth edge 221d, the edge of the positive electrode active material layer 2212 and the sixth edge 221d jointly constitute the edge of the other end of the positive electrode plate 221 in the second direction Y.

The positive electrode active material layer 2212 extends to the fifth edge 221c and/or the sixth edge 221d, thereby facilitating coating of the positive electrode active material layer 2212, and thus facilitating processing and manufacturing of the positive electrode plate 221.

In the foregoing solution, the positive electrode active material layer 2212 extends to the fifth edge 221c and/or the sixth edge 221d, and thus, steps at two ends of the positive electrode plate 221 in the second direction Y can be eliminated, thereby further lowering the risk of squeeze and shear exerted by the edge of the positive electrode active material layer 2212 on the negative electrode plate 222, and lowering the risk of shear fracture of the negative electrode plate 222 during the charge-discharge cycles of the battery cell 20.

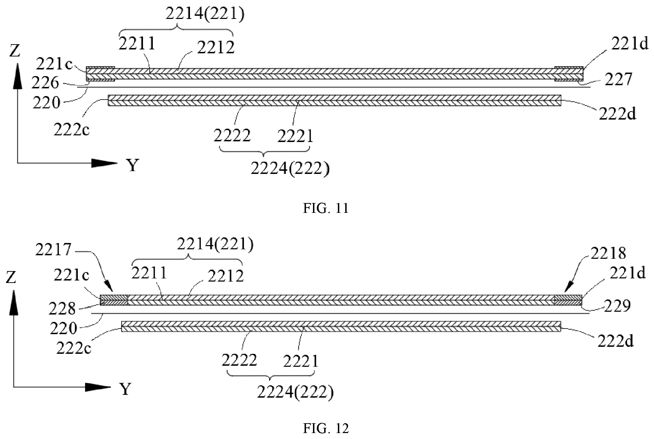

Referring to FIG. 11, FIG. 11 is a schematic assembly diagram of a fourth insulating member and a fifth insulating member with a positive electrode plate provided in some embodiments of the present application. According to some embodiments of the present application, the electrode assembly 22 further includes a fourth insulating member 226. A portion of the fourth insulating member 226 is disposed on a portion of the positive electrode active material layer 2212 extending beyond the seventh edge 222c. A thickness of the fourth insulating member 226 is less than that of the positive electrode active material layer 2212, and in the thickness direction Z of the positive electrode plate, an orthographic projection of the seventh edge 222c falls within an orthographic projection of the fourth insulating member 226. In addition/alternatively, the electrode assembly 22 further includes a fifth insulating member 227. A portion of the fifth insulating member 227 is disposed on a portion of the positive electrode active material layer 2212 extending beyond the eighth edge 222d. A thickness of the fifth insulating member 227 is less than that of the positive electrode active material layer 2212, and in the thickness direction Z of the positive electrode plate, an orthographic projection of the eighth edge 222d falls within an orthographic projection of the fifth insulating member 227.

Viewed in the thickness direction Z of the positive electrode plate, the fourth insulating member 226 partially overlaps the negative electrode plate 222, so that the orthographic projection of the seventh edge 222c of the negative electrode plate 222 falls within the orthographic projection of the fourth insulating member 226. Viewed in the thickness direction Z of the positive electrode plate, the fifth insulating member 227 partially overlaps the negative electrode plate 222, so that the orthographic projection of the eighth edge 222d falls within the orthographic projection of the fifth insulating member 227.

In the foregoing solution, the thickness of the fourth insulating member 226 is less than that of the positive electrode active material layer 2212, and a height difference between the fourth insulating member 226 and the positive electrode active material layer 2212 is relatively small, and/or, the thickness of the fifth insulating member 227 is less than that of the positive electrode active material layer 2212, and a height difference between the fifth insulating member 227 and the positive electrode active material layer 2212 is relatively small, and thus, the effect of shearing on the negative electrode plate 222 can be reduced, thereby lowering the risk of shear fracture of the negative electrode plate 222, and the fourth insulating member 226 and the fifth insulating member 227 occupy relatively small assembly space. Furthermore, the orthographic projection of the seventh edge 222c falls within the orthographic projection of the fourth insulating member 226, and/or, the orthographic projection of the eighth edge 222d falls within the orthographic projection of the fifth insulating member 227, and thus, the risk of damage to a separator 220 resulting from the precipitation of metal ions on the surface of the negative electrode current collector can be lowered, thereby lowering the risk of a contact-induced short circuit between the positive and negative electrodes.

According to some embodiments of the present application, the fourth insulating member 226 is an insulating coating or an insulating adhesive layer; and/or, the fifth insulating member 227 is an insulating coating or an insulating adhesive layer.

In the foregoing solution, when the fourth insulating member 226 and/or the fifth insulating member 227 is fitted with the positive electrode plate 221, the insulating coating is sprayed onto the surface of the positive electrode active material layer 2212, and the insulating coating is formed into the fourth insulating member 226 and/or the fifth insulating member 227 after dried and solidified, thereby facilitating operations. Alternatively, the fourth insulating member 226 and/or the fifth insulating member 227 may be the insulating adhesive layer pasted to the surface of the positive electrode active material layer 2212, so that the operation is simple and the processing and manufacturing difficulty is low.

In some embodiments, materials of the fourth insulating member 226 and the fifth insulating member 227 may be the same as that of the first insulating member 223, thereby reducing the manufacturing costs.

Referring to FIG. 12, FIG. 12 is a schematic assembly diagram of a sixth insulating member and a seventh insulating member with a positive electrode plate provided in some embodiments of the present application. According to some embodiments of the present application, the seventh edge 222c extends beyond the positive electrode active material layer 2212 in the second direction Y. The positive electrode current collector 2211 has a third uncoated foil region 2217. The third uncoated foil region 2217 is located between the fifth edge 221c and the positive electrode active material layer 2212. The electrode assembly 22 further includes a sixth insulating member 228. The sixth insulating member 228 covers the third uncoated foil region 2217, and in the thickness direction Z of the positive electrode plate, the orthographic projection of the seventh edge 222c falls within an orthographic projection of the sixth insulating member 228. In addition/alternatively, the eighth edge 222d extends beyond the positive electrode active material layer 2212 in the second direction Y. The positive electrode current collector 2211 has a fourth uncoated foil region 2218. The fourth uncoated foil region 2218 is located between the sixth edge 221d and the positive electrode active material layer 2212. The electrode assembly 22 further includes a seventh insulating member 229. The seventh insulating member 229 covers the fourth uncoated foil region 2218, and in the thickness direction Z of the positive electrode plate, the orthographic projection of the eighth edge 222d falls within an orthographic projection of the seventh insulating member 229.

The third uncoated foil region 2217 is a region of the positive electrode current collector 2211 that is close to the fifth edge 221c and is not coated with the positive electrode active material layer 2212. The third uncoated foil region 2217 is located between the fifth edge 221c and the positive electrode active material layer 2212 in the second direction Y.

The sixth insulating member 228 is an insulating component, and can insulate and separate the positive electrode current collector 2211 and the negative electrode plate 222.

The sixth insulating member 228 has certain thickness. When the sixth insulating member 228 is disposed in the third uncoated foil region 2217, the sixth insulating member 228 covers the surface of the positive electrode current collector 2211, and the sixth insulating member 228 is in contact with the edge of the positive electrode active material layer 2212, so that a height of a step, at the third uncoated foil region 2217, on the positive electrode plate 221 can be mitigated. On the same side of the positive electrode current collector 2211, a thickness of the sixth insulating member 228 may be the same as or different from that of the positive electrode active material layer 2212.

The fourth uncoated foil region 2218 is a region of the positive electrode current collector 2211 that is close to the sixth edge 221d and is not coated with the positive electrode active material layer 2212. The fourth uncoated foil region 2218 is located between the sixth edge 221d and the positive electrode active material layer 2212 in the second direction Y.

The seventh insulating member 229 is an insulating component, and can insulate and separate the positive electrode current collector 2211 and the negative electrode plate 222.

The seventh insulating member 229 has certain thickness. When the seventh insulating member 229 is disposed in the fourth uncoated foil region 2218, the seventh insulating member 229 covers the surface of the positive electrode current collector 2211, and the seventh insulating member 229 is in contact with the edge of the positive electrode active material layer 2212, so that a height of a step, at the fourth uncoated foil region 2218, on the positive electrode plate 221 can be mitigated. On the same side of the positive electrode current collector 2211, a thickness of the seventh insulating member 229 may be the same as or different from that of the positive electrode active material layer 2212.

In the foregoing solution, the seventh edge 222c extends beyond the positive electrode active material layer 2212 in the second direction Y. The sixth insulating member 228 is disposed in the third uncoated foil region 2217, and in the thickness direction Z of the positive electrode plate, the orthographic projection of the seventh edge 222c falls within the orthographic projection of the sixth insulating member 228, so that at the end of the positive electrode plate 221 close to the fifth edge 221c, a height of a step close to the edge of the positive electrode active material layer 2212 is relatively low, and thus, the effects of squeeze and shear exerted by the step of the positive electrode plate 221 on the negative electrode plate 222 during the charge-discharge cycles of the battery cell 20 can be reduced, thereby reducing the probability of shear fracture of the negative electrode plate. The eighth edge 222d extends beyond the positive electrode active material layer 2212 in the second direction Y. The seventh insulating member 229 is disposed in the fourth uncoated foil region 2218, and in the thickness direction Z of the positive electrode plate, the orthographic projection of the eighth edge 222d falls within the orthographic projection of the seventh insulating member 229, so that at the end of the positive electrode plate 221 close to the sixth edge 221d, a height of a step close to the edge of the positive electrode active material layer 2212 is relatively low, and thus, the effects of squeeze and shear exerted by the step of the positive electrode plate 221 on the negative electrode plate 222 during the charge-discharge cycles of the battery cell 20 can be reduced, thereby reducing the probability of shear fracture of the negative electrode plate.

According to some embodiments of the present application, in the thickness direction Z of the positive electrode plate, a surface of the sixth insulating member 228 facing away from the positive electrode current collector 2211 does not extend beyond a surface of the positive electrode active material layer 2212 facing away from the positive electrode current collector 2211, and/or, a surface of the seventh insulating member 229 facing away from the positive electrode current collector 2211 does not extend beyond the surface of the positive electrode active material layer 2212 facing away from the positive electrode current collector 2211.

On the same side of the positive electrode current collector 2211, the surface of the sixth insulating member 228 facing away from the positive electrode current collector 2211 does not extend beyond the surface of the positive electrode active material layer 2212 facing away from the positive electrode current collector 2211, so that the thickness of the sixth insulating member 228 is less than or equal to that of the positive electrode active material layer 2212, and an assembly space occupied by the sixth insulating member 228 can be reduced, thereby reducing the effect on the energy density of the battery cell 20.

On the same side of the positive electrode current collector 2211, the surface of the seventh insulating member 229 facing away from the positive electrode current collector 2211 does not extend beyond the surface of the positive electrode active material layer 2212 facing away from the positive electrode current collector 2211, so that the thickness of the seventh insulating member 229 is less than or equal to that of the positive electrode active material layer 2212, and an assembly space occupied by the seventh insulating member 229 can be reduced, thereby reducing the effect on the energy density of the battery cell 20.

In the foregoing solution, the surface of the sixth insulating member 228 facing away from the positive electrode current collector 2211 does not extend beyond the surface of the positive electrode active material layer 2212 facing away from the positive electrode current collector 2211, and thus, a height transition from the positive electrode active material layer 2212 to the sixth insulating member 228 can be achieved in the second direction Y. The surface of the seventh insulating member 229 facing away from the positive electrode current collector 2211 does not extend beyond the surface of the positive electrode active material layer 2212 facing away from the positive electrode current collector 2211, and thus, a height transition from the positive electrode active material layer 2212 to the seventh insulating member 229 can be achieved in the second direction Y, thereby reducing a height difference of the positive electrode plate 221 at the edge of the positive electrode active material layer 2212, and thus lowering the risk of shear fracture of the negative electrode plate 222 during the charge-discharge cycles of the battery cell 20.

In some embodiments, one end of the sixth insulating member 228 is connected with the positive electrode active material layer 2212, and the sixth insulating member 228 is attached to the positive electrode active material layer 2212, so that a smooth transition from the positive electrode active material layer 2212 to the sixth insulating member 228 is achieved. One end of the seventh insulating member 229 is connected with the positive electrode active material layer 2212, and the seventh insulating member 229 is attached to the positive electrode active material layer 2212, so that a smooth transition from the positive electrode active material layer 2212 to the seventh insulating member 229 is achieved. The effects of squeeze and shear exerted by the edge of the positive electrode active material layer 2212 on the negative electrode plate 222 is reduced when the positive electrode plate 221 expands.

According to some embodiments of the present application, the sixth insulating member 228 and the seventh insulating member 229 are both an insulating coating coated onto the positive electrode current collector 2211, or the sixth insulating member 228 and the seventh insulating member 229 are both an insulating adhesive layer pasted to the positive electrode current collector 2211.

In the foregoing solution, when the sixth insulating member 228 and the seventh insulating member 229 are assembled with the positive electrode plate 221, the insulating coating is sprayed onto the surface of the positive electrode current collector 2211, and the insulating coating becomes the sixth insulating member 228 and the seventh insulating member 229 after dried and solidified, thereby facilitating operations. Alternatively, the sixth insulating member 228 and the seventh insulating member 229 may be the insulating adhesive layer pasted to the surface of the positive electrode current collector 2211, so that the operation is simple and the processing and manufacturing difficulty is low.

In some embodiments, materials of the sixth insulating member 228 and the seventh insulating member 229 may be the same as that of the first insulating member 223, thereby reducing the manufacturing costs.

According to some embodiments of the present application, the negative electrode plate 222 includes a negative electrode current collector 2221 and a metal layer 2222. The metal layer 2222 is disposed on a surface of the negative electrode current collector 2221.

The metal layer 2222 is overlaid on the surface of the negative electrode current collector 2221 to form the negative electrode plate 222.

The negative electrode plate 222 may include a second body portion 2224 and a negative electrode tab 2223 extending out from an edge of the second body portion 2224. The edge of the second body portion 2224 from which the negative electrode tab 2223 extends out may be the second edge 222a. The metal layer 2222 may completely cover the negative electrode current collector 2221 that constitutes the second body portion 2224, so that the battery cell 20 constituted from the negative electrode plate 222 has a relatively high energy density. In some embodiments, the second edge 222a and the fourth edge 222b may be two opposite edges of the second body portion 2224 in the first direction X. The negative electrode tab 2223 can extend out from the second edge 222a, or the negative electrode tab 2223 can extend out from the fourth edge 222b.

In the foregoing solution, the metal layer 2222 has a relatively thin thickness, and when the first edge 221a extends beyond the second edge 222a, the risk of shear fracture of the negative electrode plate 222 due to the squeeze and shear exerted by the positive electrode plate 221 on the negative electrode current collector 2221 and the metal layer 2222 can be lowered, thereby improving the reliability of the battery cell 20.

According to some embodiments of the present application, the negative electrode current collector 2221 is copper foil, and the metal layer 2222 is a lithium metal layer. Alternatively, the negative electrode current collector 2221 is aluminum foil or copper foil, and the metal layer 2222 is a sodium metal layer.

In the foregoing solution, the metal layer 2222 is a lithium metal layer or a sodium metal layer, so that the battery cell 20 may have relatively high mass energy density and volume energy density.

In some embodiments, when the negative electrode plate 222 includes the negative electrode current collector 2221 and the metal layer 2222, the battery cell 20 constituted from the electrode assembly 22 provided in the foregoing embodiment is a metal battery cell.

According to some embodiments of the present application, the negative electrode plate 222 includes the negative electrode current collector 2221, and the surface of the negative electrode current collector 2221 is provided with no active material layer.

In the foregoing solution, the surface of the negative electrode current collector 2221 is provided with no active material layer, so that materials can be reduced and the costs can be reduced.

According to some embodiments of the present application, a thickness of the negative electrode current collector 2221 may be 5 µm to 6 µm.

Alternatively, the thickness of the negative electrode current collector 2221 may be 5 µm.

According to some embodiments of the present application, a thickness of the metal layer 2222 disposed on one side of the negative electrode current collector 2221 may be 10 µm to 45 µm.

Alternatively, the thickness of the metal layer 2222 disposed on one side of the negative electrode current collector 2221 may be, but is not limited to, 10 µm, 15 µm, 20 µm, 25 µm, 30 µm, 35 µm, 40 µm, 45 µm, or the like.

According to some embodiments of the present application, a dimension of the first edge 221a extending beyond the second edge 222a is X, and satisfies 0.3 mm≤X≤8 mm.

Alternatively, X may be, but is not limited to, 0.3 mm, 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, or the like.

In the foregoing solution, the dimension of the first edge 221a extending beyond the second edge 222a satisfies the above relationship. Therefore, the processing and manufacturing difficulty is relatively low, and the effects on energy and energy density of the battery cell 20 are relatively small.

According to some embodiments of the present application, 1.5 mm≤X≤4 mm.

Alternatively, X may be, but is not limited to, 1.5 mm, 1.75 mm, 2 mm, 2.25 mm, 2.5 mm, 2.75 mm, 3 mm, 3.25 mm, 3.5 mm, 3.75 mm, 4 mm, or the like.

In the foregoing solution, compared with 0.3 mm≤X≤8 mm, when 1.5 mm≤X≤4 mm, processing and manufacturing are easy, and the effects on the energy and energy density of the battery cell 20 are further reduced.

In some embodiments, a dimension of the third edge 221b extending beyond the fourth edge 222b in the first direction X, a dimension of the fifth edge 221c extending beyond the seventh edge 222c in the second direction Y, and a dimension of the sixth edge 221d extending beyond the eighth edge 222d in the second direction Y may each be X.

According to some embodiments of the present application, a battery 100 is provided, which includes the battery cell 20 provided in any of the foregoing embodiments.

According to some embodiments of the present application, a power consuming device is provided, which includes the battery cell 20 or the battery 100 provided in any of the foregoing embodiments. The battery cell 20 or the battery 100 is configured to supply electric energy.

The power consuming device may be any of the above-mentioned apparatus or system to which the battery cell 20 or the battery 100 is applied.

According to some embodiments of the present application, an electrode assembly 22 is provided. The electrode assembly 22 includes a positive electrode plate 221, a negative electrode plate 222, and a separator 220 disposed between the positive electrode plate 221 and the negative electrode plate 222. The positive electrode plate 221 includes a first edge 221a and a third edge 221b that are disposed opposite to each other in a first direction X, and a fifth edge 221c and a sixth edge 221d that are disposed opposite to each other in a second direction Y. The negative electrode plate 222 includes a second edge 222a corresponding to the first edge 221a, a fourth edge 222b corresponding to the third edge 221b, a seventh edge 222c corresponding to the fifth edge 221c, and an eighth edge 222d corresponding to the sixth edge 221d. The positive electrode plate 221 includes a positive electrode current collector 2211 and a positive electrode active material layer 2212. The first edge 221a, the third edge 221b, the fifth edge 221c, and the sixth edge 221d are each an edge of the positive electrode current collector 2211. A positive electrode tab 2213 extends out from the first edge 221a. The negative electrode plate 222 includes a negative electrode current collector 2221 and a metal layer 2222. The second edge 222a, the fourth edge 222b, the seventh edge 222c, and the eighth edge 222d are each an edge of the negative electrode current collector 2221. The negative electrode current collector 2221 is copper foil, and the metal layer 2222 is a lithium metal layer. Alternatively, the negative electrode current collector 2221 is aluminum foil, and the metal layer 2222 is a sodium metal layer.

The first edge 221a extends beyond the second edge 222a in the first direction X. The positive electrode plate 221 includes a first uncoated foil region 2215. The first uncoated foil region 2215 is located between the positive electrode active material layer 2212 and the first edge 221a in the first direction X. The electrode assembly 22 further includes a first insulating member 223. In a thickness direction Z of the positive electrode plate, an orthographic projection of the second edge 222a falls within an orthographic projection of the first insulating member 223, and a surface of the first insulating member 223 facing away from the positive electrode current collector 2211 does not extend beyond a surface of the positive electrode active material layer 2212 facing away from the positive electrode current collector 2211. The first insulating member 223 is an insulating coating coated onto the positive electrode current collector 2211, or the first insulating member 223 is an insulating adhesive layer pasted to the positive electrode current collector 2211.

When the electrode assembly 22 is of a wound structure, in some embodiments, in the first direction X, the second edge 222a extends beyond the positive electrode active material layer 2212, the third edge 221b extends beyond the fourth edge 222b, and the fourth edge 222b extends beyond the positive electrode active material layer 2212. The positive electrode plate 221 includes a second uncoated foil region 2216. The second uncoated foil region 2216 is located between the positive electrode active material layer 2212 and the third edge 221b in the first direction X. The electrode assembly 22 further includes a second insulating member 224. The second insulating member 224 covers the second uncoated foil region 2216. In the thickness direction Z of the positive electrode plate, an orthographic projection of the fourth edge 222b falls within an orthographic projection of the second insulating member 224. In the thickness direction Z of the positive electrode plate, a surface of the second insulating member 224 facing away from the positive electrode current collector 2211 does not extend beyond the surface of the positive electrode active material layer 2212 facing away from the positive electrode current collector 2211. The second insulating member 224 is an insulating coating coated onto the positive electrode current collector 2211, or the second insulating member 224 is an insulating adhesive layer pasted to the positive electrode current collector 2211.

When the electrode assembly 22 is of a wound structure, in some embodiments, in the first direction X, the third edge 221b extends beyond the fourth edge 222b, and the positive electrode active material layer 2212 extends to the third edge 221b. The electrode assembly 22 further includes a third insulating member 225. A portion of the third insulating member 225 is disposed on a portion of the positive electrode active material layer 2212 extending beyond the fourth edge 222b. In the thickness direction Z of the positive electrode plate, the orthographic projection of the fourth edge 222b falls within an orthographic projection of the third insulating member 225. A thickness of the third insulating member 225 is less than that of the positive electrode active material layer 2212. The third insulating member 225 may be an insulating coating or an insulating adhesive layer.

When the electrode assembly 22 is of a laminated structure, in some embodiments, in the second direction Y, the fifth edge 221c extends beyond the seventh edge 222c, the sixth edge 221d extends beyond the eighth edge 222d, and two ends of the positive electrode active material layer 2212 extend to the fifth edge 221c and the sixth edge 221d. The second direction Y is perpendicular to the first direction X. The electrode assembly 22 further includes a fourth insulating member 226 and a fifth insulating member 227. A portion of the fourth insulating member 226 is disposed on a portion of the positive electrode active material layer 2212 extending beyond the seventh edge 222c. A thickness of the fourth insulating member 226 is less than that of the positive electrode active material layer 2212. A portion of the fifth insulating member 227 is disposed on a portion of the positive electrode active material layer 2212 extending beyond the eighth edge 222d. A thickness of the fifth insulating member 227 is less than that of the positive electrode active material layer 2212. In the thickness direction Z of the positive electrode plate, an orthographic projection of the seventh edge 222c falls within an orthographic projection of the fourth insulating member 226, and an orthographic projection of the eighth edge 222d falls within an orthographic projection of the fifth insulating member 227. The fourth insulating member 226 is an insulating coating or an insulating adhesive layer. The fifth insulating member 227 is an insulating coating or an insulating adhesive layer.

When the electrode assembly 22 is of a laminated structure, in some embodiments, in the second direction Y, the fifth edge 221c extends beyond the seventh edge 222c, the seventh edge 222c extends beyond the positive electrode active material layer 2212, the sixth edge 221d extends beyond the eighth edge 222d, and the eighth edge 222d extends beyond the positive electrode active material layer 2212. The positive electrode plate 221 has a third uncoated foil region 2217 and a fourth uncoated foil region 2218. In the second direction Y, the third uncoated foil region 2217 is located between the fifth edge 221c and the positive electrode active material layer 2212, and the fourth uncoated foil region 2218 is located between the sixth edge 221d and the positive electrode active material layer 2212. The electrode assembly 22 further includes a sixth insulating member 228 and a seventh insulating member 229. The sixth insulating member 228 covers the third uncoated foil region 2217. The seventh insulating member 229 covers the fourth uncoated foil region 2218. In the thickness direction Z of the positive electrode plate, the orthographic projection of the seventh edge 222c falls within an orthographic projection of the sixth insulating member 228, and the orthographic projection of the eighth edge 222d falls within an orthographic projection of the seventh insulating member 229. In the thickness direction Z of the positive electrode plate, a surface of the sixth insulating member 228 facing away from the positive electrode current collector 2211 does not extend beyond the surface of the positive electrode active material layer 2212 facing away from the positive electrode current collector 2211, and a surface of the seventh insulating member 229 facing away from the positive electrode current collector 2211 does not extend beyond the surface of the positive electrode active material layer 2212 facing away from the positive electrode current collector 2211. The sixth insulating member 228 and the seventh insulating member 229 are both an insulating coating coated onto the positive electrode current collector 2211, or the sixth insulating member 228 and the seventh insulating member 229 are both an insulating adhesive layer pasted to the positive electrode current collector 2211.

According to the electrode assembly 22 in the embodiment of the present application, during the charge-discharge cycles of the battery cell 20, the effects of squeeze and shear exerted by the positive electrode plate 221 on the negative electrode plate 222 due to expansion can be reduced, thereby lowering the risk of shear fracture of the negative electrode plate 222, so that the battery cell 20 constituted from the electrode assembly 22 has relatively high reliability.

Although the present application has been described with reference to preferred embodiments, various improvements can be made thereto and equivalents can be substituted for components thereof without departing from the scope of the present application. Especially, as long as there is no structural conflict, the various technical features mentioned in each embodiment can be combined in any way. The present application is not limited to the specific embodiments disclosed herein, but includes all technical solutions that fall within the scope of the claims.

## Claims

1. A battery cell, comprising an electrode assembly, wherein the electrode assembly comprises a positive electrode plate and a negative electrode plate, the positive electrode plate comprises a first edge in a first direction, the negative electrode plate comprises a second edge corresponding to the first edge, and the first edge extends beyond the second edge in the first direction.

2. The battery cell according to claim 1, wherein a thickness of the negative electrode plate is H1, a thickness of the positive electrode plate is H2, and satisfy H1<H2.

3. The battery cell according to claim 1 or 2, wherein the thickness of the negative electrode plate is H1, and satisfies 5 µm≤H1≤100 µm.

4. The battery cell according to claim 3, wherein 10 µm≤H1≤80 µm.

5. The battery cell according to any one of claims 1 to 4, wherein the positive electrode plate comprises a positive electrode current collector and a positive electrode active material layer, the positive electrode active material layer is disposed on a surface of the positive electrode current collector, the positive electrode current collector has the first edge, the positive electrode plate further comprises a positive electrode tab, and the positive electrode tab extends out from the first edge.

6. The battery cell according to claim 5, wherein the second edge extends beyond the positive electrode active material layer in the first direction, the positive electrode current collector has a first uncoated foil region, the first uncoated foil region is located between the first edge and the positive electrode active material layer, the electrode assembly further comprises a first insulating member, the first insulating member covers the first uncoated foil region, and in a thickness direction of the positive electrode plate, an orthographic projection of the second edge falls within an orthographic projection of the first insulating member.

7. The battery cell according to claim 6, wherein in the thickness direction of the positive electrode plate, a surface of the first insulating member facing away from the positive electrode current collector does not extend beyond a surface of the positive electrode active material layer facing away from the positive electrode current collector.

8. The battery cell according to claim 6 or 7, wherein the first insulating member is an insulating coating or an insulating adhesive layer.

9. The battery cell according to any one of claims 1 to 8, wherein the positive electrode plate further has a third edge, the third edge is disposed opposite to the first edge in the first direction, the negative electrode plate further has a fourth edge corresponding to the third edge, the fourth edge is disposed opposite to the second edge in the first direction, and the third edge extends beyond the fourth edge in the first direction.

10. The battery cell according to claim 9, wherein the positive electrode plate comprises the positive electrode current collector and the positive electrode active material layer, the positive electrode active material layer is disposed on the surface of the positive electrode current collector, the fourth edge extends beyond the positive electrode active material layer in the first direction, the positive electrode current collector has a second uncoated foil region, the second uncoated foil region is located between the third edge and the positive electrode active material layer, the electrode assembly further comprises a second insulating member, the second insulating member covers the second uncoated foil region, and in the thickness direction of the positive electrode plate, an orthographic projection of the fourth edge falls within an orthographic projection of the second insulating member.

11. The battery cell according to claim 10, wherein in the thickness direction of the positive electrode plate, a surface of the second insulating member facing away from the positive electrode current collector does not extend beyond the surface of the positive electrode active material layer facing away from the positive electrode current collector.

12. The battery cell according to claim 10 or 11, wherein the second insulating member is an insulating coating coated onto the positive electrode current collector, or the second insulating member is an insulating adhesive layer pasted to the positive electrode current collector.

13. The battery cell according to any one of claims 9 to 12, wherein the positive electrode plate comprises the positive electrode current collector and the positive electrode active material layer, the positive electrode active material layer is disposed on the surface of the positive electrode current collector, and the positive electrode active material layer extends to the third edge in the first direction.

14. The battery cell according to claim 13, wherein the electrode assembly further comprises a third insulating member, and a portion of the third insulating member is disposed on a portion of the positive electrode active material layer extending beyond the fourth edge.

15. The battery cell according to claim 14, wherein in the thickness direction of the positive electrode plate, the orthographic projection of the fourth edge falls within an orthographic projection of the third insulating member, and a thickness of the third insulating member is less than that of the positive electrode active material layer.

16. The battery cell according to claim 14 or 15, wherein the third insulating member is an insulating coating or an insulating adhesive layer.

17. The battery cell according to any one of claims 1 to 16, wherein the positive electrode plate further has the third edge, a fifth edge, and a sixth edge, the third edge is disposed opposite to the first edge in the first direction, the fifth edge connects a first end of the first edge and a first end of the third edge, the sixth edge connects a second end of the first edge and a second end of the third edge, the negative electrode plate further has a seventh edge corresponding to the fifth edge and an eighth edge corresponding to the sixth edge, in a second direction, the fifth edge extends beyond the seventh edge, and/or, the sixth edge extends beyond the eighth edge, and the second direction is perpendicular to the first direction.

18. The battery cell according to claim 17, wherein the positive electrode plate comprises the positive electrode current collector and the positive electrode active material layer, the positive electrode active material layer is disposed on the surface of the positive electrode current collector, and in the second direction, the positive electrode active material layer extends to the fifth edge, and/or, the positive electrode active material layer extends to the sixth edge.

19. The battery cell according to claim 18, wherein the electrode assembly further comprises a fourth insulating member, a portion of the fourth insulating member is disposed on a portion of the positive electrode active material layer extending beyond the seventh edge, a thickness of the fourth insulating member is less than that of the positive electrode active material layer, and in the thickness direction of the positive electrode plate, an orthographic projection of the seventh edge falls within an orthographic projection of the fourth insulating member; and/or, the electrode assembly further comprises a fifth insulating member, a portion of the fifth insulating member is disposed on a portion of the positive electrode active material layer extending beyond the eighth edge, a thickness of the fifth insulating member is less than that of the positive electrode active material layer, and in the thickness direction of the positive electrode plate, an orthographic projection of the eighth edge falls within an orthographic projection of the fifth insulating member.

20. The battery cell according to claim 19, wherein the fourth insulating member is an insulating coating or an insulating adhesive layer; and/or, the fifth insulating member is an insulating coating or an insulating adhesive layer.

21. The battery cell according to any one of claims 1 to 20, wherein the negative electrode plate comprises a negative electrode current collector and a metal layer, and the metal layer is disposed on a surface of the negative electrode current collector.

22. The battery cell according to claim 21, wherein the negative electrode current collector is copper foil, and the metal layer is a lithium metal layer; or, the negative electrode current collector is aluminum foil or copper foil, and the metal layer is a sodium metal layer.

23. The battery cell according to any one of claims 1 to 22, wherein the negative electrode plate comprises the negative electrode current collector, and the surface of the negative electrode current collector is provided with no active material layer.

24. The battery cell according to any one of claims 1 to 23, wherein a dimension of the first edge extending beyond the second edge is X, and satisfies 0.3 mm≤X≤8 mm.

25. The battery cell according to claim 24, wherein 1.5 mm≤X≤4 mm.

26. A battery, comprising the battery cell according to any one of claims 1 to 25.

27. A power consuming device, comprising the battery cell according to any one of claims 1 to 25 or the battery according to claim 26, wherein the battery cell or the battery is configured to supply electric energy.
